# EUROPÄISCHE PATENTSCHRIFT

(11) **EP 2 176 627 B1**
(45) Veröffentlichungstag und Bekanntmachung des Hinweises auf die Patenterteilung: **31.05.2017**
(21) Anmeldenummer: 08786024.3
(22) Anmeldetag: 10.07.2008
(51) Int. Cl.: G01F 1/58

(54) **ROHRLEITUNG BZW. MESSROHR MIT MINDESTENS EINER, MINDESTENS BEREICHSWEISE ISOLIERENDEN SCHICHT UND VERFAHREN ZU DESSEN HERSTELLUNG**
PIPELINE OR MEASURING TUBE HAVING AT LEAST ONE LAYER WHICH INSULATES AT LEAST IN CERTAIN REGIONS, AND PROCESS FOR THE PRODUCTION THEREOF
CONDUIT TUBULAIRE OU TUBE DE MESURE PRÉSENTANT AU MOINS UNE COUCHE DONT AU MOINS CERTAINES PARTIES SONT ISOLANTES ET PROCÉDÉ POUR SA FABRICATION

(30) Priorität: 14.08.2007 DE 102007038507
(43) Veröffentlichungstag der Anmeldung: 21.04.2010
(73) Patentinhaber: Endress+Hauser Flowtec AG, 4153 Reinach (CH)
(72) Erfinder: VOIGT, Frank, 79576 Weil Am Rhein (DE); WOHLGEMUTH, Werner, CH-4206 Seewen (CH)
(74) Vertreter: Andres, Angelika Maria
(86) Internationale Anmeldenummer: PCT/EP2008/058967
(87) Internationale Veröffentlichungsnummer: WO 2009/021787

(56) Entgegenhaltungen:
- EP-A- 0 036 513
- EP-A- 0 581 017
- EP-A- 1 039 269
- JP-A- 59 137 822
- US-B1- 6 658 720

## Beschreibung

Die vorliegende Erfindung betrifft eine Rohrleitung bzw. ein Messrohr mit mindestens einer, mindestens bereichsweise isolierenden Schicht und ein Verfahren zu dessen Herstellung.

Mittels einer isolierenden Schicht wird ein ansonsten elektrisch leitender Körper gegenüber einem Teil seiner Umwelt isoliert. Vor allem aus der magnetisch induktiven Durchflussmessung oder dem Pumpenbau sind Beispiele für derartige Rohre einer fachlich qualifizierten Person an und für sich bekannt. Herkömmliche derartige Rohrleitungen oder Messrohre bestehen aus einem meist metallischen Trägerrohr, einer isolierenden Schicht sowie einer in die isolierende Schicht eingebrachten Verstärkung. Die Verstärkung kann dabei aus einem porösen Material bestehen.

Üblicherweise wird die Verstärkung in das Trägerrohr eingebracht und steht mit diesem in Kontakt. Dazu werden meist Bronzekugeln im Trägerrohr gesintert.

Ein Beispiel dafür ist die Promag H-Reihe von Endress+Hauser mit Durchmessern kleiner 25mm.

Es sind Messrohre, insbesondere aus der magnetisch induktiven Durchflussmessung bekannt, die mit einer Auskleidung auf der Innenseite versehen sind, um die Elektroden gegenüber dem Trägerrohr elektrisch zu isolieren. Diese Auskleidung wird üblicherweise Liner genannt. Ein aufgeklebter oder aufvulkanisierter oder eingepresster Liner hat den Nachteil, dass die Haftung zwischen Trägerrohr und Liner bei Temperatur- oder Druckschwankungen nicht hinreichend gegeben ist. Dies kann zu einer Ablösung beispielsweise aufgrund unterschiedlicher Temperaturausdehnungskoeffizienten zwischen Trägerrohr und Liner oder durch auftretenden Unterdruck führen, womit die Messgenauigkeit erheblich beeinträchtigt wird. Aufgesprühte oder thermisch aufgeschmolzene Liner haben meist geringere Isolationseigenschaften, wodurch Messgenauigkeit und Lebensdauer der Messrohre abnimmt.

Zum Stand der Technik gehören Befestigungskonstruktionen, wobei der Liner an der Innenseite des Trägerrohrs mit Schwalbenschwanz- oder Brückenkonstruktionen befestigt ist. Eine derartige punktuelle Befestigung kann eine Ablösung des Liners nicht dauerhaft verhindern. Des Weiteren sind Stützkörper bekannt geworden, die in das Trägerrohr eingebracht sind, um den Liner zu verstärken. Zu den beschriebenen Stützkörpern gehört gemäß JP 59 137822 A ein Rohr mit einem etwas kleineren Außendurchmesser als der Innendurchmesser des Trägerrohrs und einer bestimmten Anzahl an Löchern, welches in das Trägerrohr eingebracht ist und vom Isoliermaterial vollständig umschlossen wird. Die Anzahl der Löcher ist sorgfältig zu wählen, da bei großem Lochabstand die Gefahr einer Ablösung der Isolierung von dem der Verstärkung dienenden Rohr besteht. Die Menge des isolierenden Materials, welches das zur Verstärkung dienende Rohr vollständig umkleiden muss, ist relativ hoch.

Ein weiterer Stützkörper besteht nach EP 0 036 513 A aus einem gitter- oder netzartigen oder dreidimensionalen Gewebe, welches aus verschiedenen Werkstoffen hergestellt sein kann, bspw. aus Metall, welches in das Trägerrohr eingebracht und mit diesem punktuell stoffschlüssig verbunden wird und welches vom Material der isolierenden Schicht umschlossen wird. Um eine ausreichende Stabilität des Liners zu gewährleisten, sind viele Befestigungspunkte notwendig. Eine Verstärkung mit einem solchen Stützkörper ist bei konischem Verlauf des Innendurchmessers des Messrohrs sehr aufwendig zu realisieren.

Ein weiterer Stützkörper besteht aus einem porösen Material, in welche Poren das Material der isolierenden Schicht teilweise eindringt und so an dem Stützkörper haftet. Ein solcher Stützkörper wird beispielsweise in der EP1039269A1 beschrieben. Der Stützkörper selbst ist aus biegesteifem Material, was dem somit verstärkten Liner eine ausreichende Stabilität gegenüber einer Ablösung vom Trägerrohr gewährleisten soll oder vor Faltungen des Liners oder vor einem Einfallen des Liners schützen soll. Der poröse Stützkörper muss dazu nicht das Trägerrohr berühren oder mit diesem fest verbunden sein.

Die EP0581017B1 und die US 6 658 720 B1 beschreiben ein Messrohr mit einem porösen Stützkörper, welcher mit dem Trägerrohr in Kontakt steht und das Material der isolierenden Schicht nicht bis an die Innenseite des Trägerrohrs gelangt. Dadurch sind Poren auf der dem Trägerrohr zugewandten Seite des Stützkörpers ungefüllt.
Alle genannten Konstruktionen haben den Nachteil, dass sie relativ aufwendig in der Herstellung und damit relativ teuer sind. Eine nahtlose Verbindung zwischen Stützkörper und Trägerrohr, insbesondere eine stoffschlüssige Verbindung, welche axiale und radiale Kräfte aufnehmen kann, wird nicht vorgeschlagen.
Zur Herstellung einer Rohrleitung bzw. eines Messrohrs mit einer isolierenden Schicht sind einer fachlich qualifizierten Person Verfahren bekannt, welche einen Stützkörper in einem vorgefertigten Trägerrohr befestigen oder diesen Stützkörper in dem Trägerrohr herstellen und anschließend die isolierende Schicht in das Trägerrohr mit eingebrachtem Stützkörper einbringen. Die EP1039269A1 beschreibt ein Verfahren, bei dem im Lumen eines vorgefertigten Trägerrohrs ein poröser Stützkörper passförmig gebildet wird, indem ein Sinterdorn in das Lumen des Trägerrohrs eingebracht wird, welcher mit dem Trägerrohr einen Sinterraum bildet, worin das Sinterausgangsmaterial des Stützkörpers eingebracht und gesintert wird und anschließend der Sinterdorn entfernt wird und daran anschließend ein Gießdorn im Lumen des Trägerrohrs mit Stützkörper eingebracht wird, welcher mit dem Trägerrohr einen Gießraum bildet, worin das verflüssigte Ausgangsmaterial der isolierenden Schicht eingefüllt wird, dieses in den Stützkörper eindringt und erstarrt, bevor der Gießdorn entfernt wird.
Es hat sich gezeigt, dass das separate Einbringen eines Stützkörpers einen erheblichen Fertigungsaufwand bedeutet, insbesondere wenn dieser passgenau und/oder mit dem Trägerrohr fest verbunden ist und/oder wenn Vorrichtungsbedingte Merkmale, wie beispielsweise Öffnungen zum späteren Einbringen von Elektroden oder Spulenkernen bei magnetisch induktiven Durchflussmessgeräten, berücksichtigt werden müssen. Die Aufgabe der Erfindung besteht daher darin, eine für industrielle Anwendungen, insbesondere für ein magnetisch induktives Durchflussmessgerät, kostengünstig herstellbare Rohrleitung bzw. Messrohr mit isolierender Schicht vorzuschlagen und ein Verfahren zur Herstellung dieser Vorrichtung anzugeben, welches wenige Verfahrensschritte umfasst und geringen Fertigungsaufwand darstellt.

Die Aufgabe bezüglich der Vorrichtung wird dadurch gelöst, dass ein rohrförmiges Element, welches eine ansonsten geschlossene Struktur aufweist, mindestens einen Bereich mit einer offenporigen zellularen Struktur aufweist, wobei das Material der isolierenden Schicht, beim Aufbringen der isolierenden Schicht, in die Poren der offenporigen zellularen Struktur des rohrförmigen Elements eindringen kann und die isolierende Schicht auf der zu isolierenden Seite eine geschlossene homogene Struktur aufweist.

Das rohrförmige Element, welches einen Bereich mit einer offenporigen zellularen Struktur aufweist und welches ansonsten eine geschlossene Struktur aufweist, ist einstückig. Die homogene geschlossene Struktur umschließt die offenporige zellulare Struktur koaxial und dient als äußere formgebende sowie formstabilisierende Umhüllung des Messrohres. Erfindungsgemäß ist dieses einstückige rohrförmige Element durch ein Urformverfahren erhalten. Dadurch ist eine große Freiheit bezüglich der Gestaltung des Designs gegeben. Stützkörper und Trägerrohr sind also nicht zwei getrennt voneinander und/oder unterschiedlich hergestellte Körper, welche stoffschlüssig verbunden werden und/oder aus dem gleichen Material bestehen, sondern das rohrförmige Element vereint bzw. ersetzt durch seinen beschriebenen Aufbau sowohl Trägerrohr als auch Stützkörper. Aussparungen für einzubringende Körper, wie z.B. für die Elektroden eines magnetisch induktiven Durchflussmessgeräts, können schon beim Urformprozess vorgesehen werden. Auch nachträglich erzeugte Bohrungen verfügen über eine hohe Festigkeit und eine dadurch bedingte hohe Formbeständigkeit. Die erfindungsgemäße Rohrleitung bzw. das erfindungsgemäße Messrohr besitzt eine höhere Festigkeit, als eine vergleichbare Rohrleitung bzw. ein vergleichbares Messrohr mit eingebrachtem Sinterkörper als Stützkörper. Der Übergang von der homogenen geschlossenen Struktur zur offenporigen zellularen Struktur ist nahtlos.
Das Material der isolierenden Schicht ist in einem anschließendem Urformverfahren erhalten. Die Verbindung zwischen rohrförmigem Element und isolierender Schicht ist über die gesamte Länge der isolierenden Schicht näherungsweise konstant. Die Rohrleitung bzw. das Messrohr ist dadurch sehr Unterdruck-, Druck- und Temperaturschockfest und, je nach Material der isolierenden Schicht, für hygienische Anwendungen geeignet.

Nachfolgend ist stellvertretend die Anwendung der Erfindung in einem magnetisch induktiven Durchflussmessgerät beschrieben. Außer bei magnetisch induktiven Durchflussmessgeräten und bei auf Basis von Ultraschall arbeitenden Durchflussmessgeräten und bei Pumpen sind andere Anwendungen vorstellbar, in denen ein isolierendes Material in und/oder an einem, z.B. metallischen, Rohr ein- bzw. angebracht gebracht ist.

Gemäß einer vorteilhaften Weiterbildung der erfindungsgemäßen Vorrichtung sind das ansonsten eine geschlossene Struktur aufweisende rohrförmige Element und sein Bereich mit einer offenporig zellularen Struktur aus dem gleichen Material. Besonders Vorteilhaft ist die erfindungsgemäße Vorrichtung für Rohre mit genormtem Durchmesser ≤ 25mm und für Rohre mit einem über die Länge des Rohres variierenden Durchmesser in Größe und/oder Form.

Eine vorteilhafte Ausgestaltung der erfindungsgemäßen Vorrichtung schlägt vor, dass das rohrförmige Element aus einem metallischen Werkstoff besteht, insbesondere aus einem Nichteisenmetall oder einer Nichteisenmetalllegierung. Besonders vorteilhaft werden Nickellegierungen als nicht-ferromagnetischer Werkstoff eingesetzt. Diese Legierungen weisen insbesondere für magnetisch induktive Durchflussmessgeräte sehr günstige Eigenschaften auf. Auch andere Werkstoffe, die sich für eine gewerbliche Anwendung eignen und die mit einer offenporig zellularen Struktur herstellbar sind, wie z.B. Aluminiumlegierungen, Zinklegierungen, Cobalt-Chrom-Wolfram-Legierungen und einige Metallmatrix-Verbundwerkstoffe können Verwendung finden.

Eine besonders vorteilhafte Ausgestaltung der erfindungsgemäßen Vorrichtung schlägt vor, dass das einstückige, ansonsten eine geschlossene Struktur aufweisende, mit einem Bereich einer offenporig zellularen Struktur versehene rohrförmige Element mit einem Feingussverfahren in einem Guss hergestellt ist.

Eine weitere vorteilhafte Ausgestaltung der erfindungsgemäßen Vorrichtung sieht vor, dass das Material der isolierenden Schicht elektrisch nicht leitend und nicht magnetisch ist. Dies kann beispielsweise organischer Kunststoff oder natürliches Polymer sein. Die isolierende Schicht besteht besonders vorteilhaft aus elektrisch nichtleitenden und nichtmagnetischen duroplastischen oder elastomeren oder insbesondere thermoplastischen Werkstoffen. Besonders Polyurethane weisen neben Hartgummi und fluorhaltigen Kunststoffen, wie z.B. PTFE, PFA, gute chemische und mechanische Eigenschaften und eine gute Verarbeitbarkeit auf. Die isolierende Schicht ist besonders vorteilhaft mit einem Druckguss- oder Spritzgussverfahren, insbesondere mit einem Transfer-Moulding-Verfahren herzustellen. Aber auch mit anderen Verfahren ist die isolierende Schicht und ihre dazugehörige feste Verbindung mit der offenporigen zellularen Struktur des rohrförmigen Elements herzustellen.

Gemäß einer vorteilhaften Ausführungsform der erfindungsgemäßen Vorrichtung wird vorgeschlagen, die Porendichte der offenporigen zellularen Struktur des ansonsten eine geschlossene homogene Struktur aufweisenden rohrförmigen Elements in einem Bereich von 1 bis 50 Poren pro Zoll (pores per inch [ppi]) beträgt. Besonders vorteilhaft ist eine Porendichte von 10 bis 30ppi. Eine additive vorteilhafte Ausführungsform der erfindungsgemäßen Vorrichtung besteht darin, dass die Porosität der offenporigen zellularen Struktur des ansonsten eine geschlossene homogene Struktur aufweisenden rohrförmigen Elements in einem Bereich von 80 bis 99% ist. Besonders vorteilhaft ist eine Porosität von 92 bis 98%. Dadurch ist in Kombination mit der vorteilhaften Porendichte eine ausreichende Festigkeit und Stabilität der offenporigen zellularen Struktur mit gleichzeitig ausreichender Durchdringung der Poren mit dem Material der isolierenden Schicht und einer guten Stabilität der isolierenden Schicht gegeben.

Eine weitere besonders vorteilhafte Ausgestaltung der erfindungsgemäßen Vorrichtung sieht vor, dass die Rohrleitung bzw. das Messrohr Teil eines Systems zur Durchflussmessung, insbesondere zur magnetisch induktiven Durchflussmessung ist oder dass die Rohrleitung bzw. das Messrohr Teil einer Pumpe ist.

Eine sehr vorteilhafte Ausführung der erfindungsgemäßen Vorrichtung besteht darin, dass sich die offenporige zellulare Struktur des rohrförmigen Elements auf der Seite

der homogenen geschlossenen Struktur des rohrförmigen Elements befindet, die einem in der Rohrleitung bzw. in dem Messrohr strömenden Medium zugewandt ist.

Die Seite der isolierenden Schicht mit der geschlossenen homogenen Struktur ist dementsprechend dem in der Rohrleitung bzw. in dem Messrohr strömenden Medium zugewandt. Insbesondere zur Durchflussmessung des in der Rohrleitung bzw. in dem Messrohr strömenden Mediums ist diese Ausführungsform von Vorteil.

Eine weitere sehr vorteilhafte Ausgestaltung der erfindungsgemäßen Vorrichtung ist darin zu sehen, dass die offenporige zellulare Struktur des ansonsten eine geschlossene homogene Struktur aufweisenden rohrförmigen Elements im Bereich einer in dem rohrförmigen Element eingebrachten Öffnung zugewandt ist. Eine solche Öffnung ist z.B. bei einem magnetisch induktiven Durchflussmessgerät vorgesehen, wobei in diese Öffnungen z.B. Elektroden eingesetzt werden. Üblicherweise können in einem rohrförmigen Element auch mehrere Öffnungen vorgesehen werden.

Gemäß einer weiteren vorteilhaften Ausgestaltung der erfindungsgemäßen Vorrichtung besitzt das rohrförmige Element eine Schulter in der geschlossenen Struktur des rohrförmigen Elements, die in Richtung einer Stirnseite des rohrförmigen Elements zeigt.

Gemäß einer weiteren vorteilhaften Ausgestaltung der erfindungsgemäßen Vorrichtung überragt der Bereich der offenporigen zellularen Struktur des rohrförmigen Elements den Bereich mit der geschlossenen homogenen Struktur im Bereich der Schulter in Richtung der Stirnseite des rohrförmigen Elements. Dies hat verfahrenstechnische Vorteile beim Einbringen der isolierenden Schicht. So wird bspw. ein geringerer Fliesswiderstand bei der Formfüllung erzielt, womit ein höherer Materialdurchsatz einhergeht. Die Form wird mit annähernd gleicher Viskosität des Formstoffes (PFA) schnell gefüllt.
Nach einer weiteren vorteilhaften Ausgestaltung der erfindungsgemäßen Vorrichtung ist die Wandstärke der isolierenden Schicht näherungsweise konstant.

Eine weitere vorteilhafte Ausgestaltung sieht vor, dass die lichte Weite der Rohrleitung bzw. des Messrohrs über die Länge der Rohrleitung bzw. des Messrohrs in Größe und Form variieren kann. Insbesondere in der magnetisch induktiven Durchflussmessung sind Rohre mit einem konischen Verlauf der lichten Weite über die halbe Länge des Rohrs von Vorteil.

Eine besonders vorteilhafte Ausgestaltung der erfindungsgemäßen Vorrichtung schlägt vor, dass das rohrförmige Element und die isolierende Schicht eine feste formschlüssige Verbindung eingehen. Dabei muss das Material der isolierenden Schicht nicht bis an eine Seite der geschlossenen homogenen Struktur des rohrförmigen Elements gelangen.

Gemäß einer sehr vorteilhaften Ausführungsform der erfindungsgemäßen Vorrichtung wird vorgeschlagen, dass das Material der isolierenden Schicht bis an eine Seite der geschlossenen homogenen Struktur des rohrförmigen Elements gelangt. Die Poren der offenporig zellularen Struktur des ansonsten eine geschlossene homogene Struktur aufweisenden rohrförmigen Elements werden besonders vorteilhaft vollständig ausgefüllt.

Eine ergänzende Ausführung der erfindungsgemäßen Vorrichtung ist, dass die Bereiche der offenporig zellularen Struktur und entsprechend die isolierende Schicht auf der Außenseite des rohrförmigen Elements liegen. Eine Variante der erfindungsgemäßen Vorrichtung besteht darin, dass Innen- und Außenseite des rohrförmigen Elements Bereiche der offenporig zellularen Struktur und eine isolierende Schicht aufweisen.

Zur Lösung der Aufgabe besteht die Erfindung weiterhin in einem Verfahren zum Herstellen einer erfindungsgemäßen Rohrleitung bzw. eines erfindungsgemäßen Messrohrs. Das Verfahren umfasst ein Verfahren zur Herstellung einer Rohrleitung bzw. eines Messrohrs mit mindestens einer, mindestens bereichsweise isolierenden Schicht und mit einem rohrförmigen Element, welches mindestens einen Bereich mit einer offenporigen zellularen Struktur aufweist und welches eine ansonsten geschlossene Struktur aufweist, wobei das Material der isolierenden Schicht in die Poren der offenporigen zellularen Struktur des rohrförmigen Elements eindringt und die isolierende Schicht auf der zu isolierenden Seite eine geschlossene homogene Struktur aufweist, wobei die homogene geschlossene Struktur die offenporige zellulare Struktur koaxial umschließt und als äußere formgebende sowie formstabilisierende Umhüllung des Messrohres dient. Erfindungsgemäß wird das rohrförmige Element einstückig durch ein Urformverfahren geformt, wobei der Übergang von der homogenen geschlossenen Struktur zur offenporigen zellularen Struktur nahtlos ist. Das Material der isolierenden Schicht wird durch ein anschließendes Urformverfahren geformt. Dadurch ist eine große Freiheit bezüglich der Gestaltung des Designs der Rohrleitung bzw. des Messrohrs gegeben.

Eine besonders vorteilhafte Ausführungsform des erfindungsgemäßen Verfahrens sieht vor, dass das Verfahren zur Herstellung der Rohrleitung bzw. des Messrohrs eingesetzt wird, wobei die Rohrleitung bzw. das Messrohr Teil eines Systems zur Durchflussmessung, insbesondere zur magnetisch induktiven Durchflussmessung ist oder zur Durchflussmessung auf Basis von Ultraschall oder dass die Rohrleitung bzw. das Messrohr Teil einer Pumpe ist.

Gemäß einer vorteilhaften Weiterbildung des erfindungsgemäßen Verfahrens wird das rohrförmige Element, welches mindestens einen Bereich mit einer offenporigen zellularen Struktur aufweist und welches eine ansonsten geschlossene Struktur aufweist, mit einem Urformverfahren aus einem im Wesentlichen metallischen Werkstoff mittels einer Form geformt.

Nach einer sehr vorteilhaften Ausgestaltung des Verfahrens der Erfindung wird das rohrförmige Element, welches mindestens einen Bereich mit einer offenporigen zellularen Struktur aufweist und welches eine ansonsten geschlossene Struktur aufweist, mit einem Gießverfahren, insbesondere mit einem Feingussverfahren hergestellt.

Diese Verfahren umfassen üblicherweise im Wesentlichen im Nachfolgenden aufgeführte Verfahrensschritte. Ein Grund- oder Urmodell der offenporigen zellularen Struktur, insbesondere in der Form eines rohrförmigen Elements, wird aus einem schmelzbaren, aus einem verdampfbaren oder aus einem, in einer Flüssigkeit lösbaren, Werkstoff, insbesondere aus einem Wachs oder aus einem Kunststoff, insbesondere aus einem Thermoplasten, beispielsweise mit einem Rapid-Prototyping-Verfahren oder durch Aufschäumen eines Polymers, beispielsweise Polyurethan, hergestellt. Die Grundmodelle werden zu einer so genannten Modelltraube zusammengefügt. Zu dieser Modelltraube gehört auch das Grundmodell des rohrförmigen Elements mit einer geschlossenen Struktur. An die Modelltraube wird Formstoff aufgebracht, der beispielsweise mittels einer Bindersuspension, beispielsweise aus dem gleichen Formstoff oder aus einem anderen Formstoff und einem Bindemittel, z.B. Ethylsilikat, an der Modelltraube haftet. Diese Bindersuspension wird beispielsweise durch Eintauchen der Modelltraube in die Bindersuspension aufgebracht. Weiterer Formstoff, z.B. feuerfester Quarzsand, wird beispielsweise durch Berieseln aufgebracht. Anschließend erfolgt das Ausschmelzen oder Ausbrennen des Grundmodells. Dabei darf es zu keiner wesentlichen Vergrößerung des Volumens des Materials des Grundmodells kommen, um den Zusammenhalt des Formstoffs in keiner Weise zu gefährden. Solche Verfahren sind als Replika-Verfahren bekannt. Ein Aufbringen einer zusätzlichen Frontschicht in und/oder an die verlorene Form, z.B. durch erneutes Tauchen der verlorenen Form, welche Frontschicht mit der Schmelze, also dem verflüssigten Material, aus welchem das erfindungsgemäße rohrförmige Element besteht und/oder einem Hinterfüllstoff in Berührung kommt und welche diesbezüglich besonders positive Eigenschaften hat, kann durch geschickte Wahl der Bindersuspension-Legierung-Kombination vermieden werden. Der Formstoff wird gebrannt und bildet anschließend die verlorene Form für den eigentlichen Gießvorgang. Eine Hinterfüllung der verlorenen Form mit weiterem, losen Formstoff ist möglich, jedoch nicht zwingend erforderlich. Danach erfolgt der Abguss des rohrförmigen Elements, welches mindestens einen Bereich mit einer offenporigen zellularen Struktur aufweist und welches eine ansonsten geschlossene Struktur aufweist, in die verlorene Form, mit einem verflüssigten, feingießfähigem Werkstoff, insbesondere einem metallischen Werkstoff. Der Gießvorgang erfolgt üblicherweise in die vom Brennvorgang erhitzte verlorene Form oder die verlorene Form wird mittels eines entsprechenden Werkzeugs auf eine bestimmte Temperatur gebracht. Das Entfernen des Formstoffs der verlorenen Form erfolgt herkömmlicherweise mittels Abklopfen, Vibration, unter Einsatz von Druckluft, Wasser- oder Sandstrahlen, Ultraschall oder durch Spülen mit Säuren oder Laugen.

Die genauen Prozessparameter, wie z.B. Formtemperatur, Gießtemperatur oder Abkühlbedingungen, hängen von dem verwendeten Material des herzustellenden erfindungsgemäßen rohrförmigen Elements oder des Formstoffs und/oder der Form des herzustellenden erfindungsgemäßen rohrförmigen Elements, insbesondere der Größe der offenporigen zellularen Struktur ab. Anforderungen an den Formstoff sind unter anderem eine hohe Temperaturbeständigkeit, hohe Abbildungsgenauigkeit, hohe mechanische Festigkeit für den Abguss, gute Entformbarkeit und hohes Fließvermögen und eine Reaktionspassivität gegenüber der Schmelze, also gegenüber dem für das erfindungsgemäße rohrförmige Element ausgewählten Material. Dazu werden üblicherweise gips-, phosphat- oder sulfatgebundene Formstoffe verwendet. Als Fronschicht werden üblicherweise so genannte Tauchschlicker verwendet. Anforderungen an die Frontschicht, zusätzlich zu den Anforderungen, die an den Formstoff gestellt werden, sind eine gute Kompatibilität zum Formstoff und eine unwesentliche Schrumpfung beim Trocknen. Zu den vorteilhaften Werkstoffen des erfindungsgemäßen rohrförmigen Elements zählen neben Nickel- und Messinglegierungen auch Aluminiumlegierungen, Zinklegierungen, Cobalt-Chrom-Wolfram-Legierungen und einige Metallmatrix-Verbundwerkstoffe.

Der Gießprozess erlaubt die Herstellung von Verbundbauteilen, beispielsweise von Schwämmen und massiven Bauteilen, in einem einzigen Arbeitsschritt. Dadurch ist die Verbindung zwischen offenporiger zellularer Struktur, auch Schwamm genannt, und geschlossener Struktur bzw. massivem Bauteil sehr gut. Durch die Offenporigkeit können die Schwämme mit anderen Legierungen infiltriert werden. Diese Infiltration geschieht beispielsweise in einem Schwerkraft-Kokillenguss-, einem Druckguss- oder einem Differenzdruckverfahren, auch Feingussverfahren genannt.

Eine weitere vorteilhafte Ausgestaltung des Verfahrens der Erfindung sieht vor, dass das Grundmodell der offenporigen zellularen Struktur vor dem Zusammenfügen zu der Modelltraube unter Erwärmung mechanisch bleibend verformt wird.

Nach einer weiteren vorteilhaften Ausgestaltung des Verfahrens der Erfindung ist die Größe der Pulverteile des Formstoffs klein im Vergleich zur Porengröße der offenporigen zellularen Struktur des erfindungsgemäßen rohrförmigen Elements.

Eine weitere sehr vorteilhafte Ausführungsform des erfindungsgemäßen Verfahrens schlägt vor, dass das Grundmodell der offenporigen zellularen Struktur in das Grundmodell des geschlossenen rohrförmigen Elements eingepasst wird.

Eine weitere vorteilhafte Ausführungsform des erfindungsgemäßen Verfahrens schlägt vor, dass mehrere Grundmodelle der offenporigen zellularen Struktur zusammengefügt werden, z.B. bei konischem Verlauf des Innendurchmessers des Grundmodells des geschlossenen rohrförmigen Elements.

Eine weitere vorteilhafte Ausführungsform des erfindungsgemäßen Verfahrens schlägt vor, dass mehrere Grundmodelle mit geschlossener Struktur zu einem Grundmodell des geschlossenen rohrförmigen Elements zusammengefügt werden.

Gemäß einer weiteren vorteilhaften Ausführungsform des erfindungsgemäßen Verfahrens wird vorgeschlagen, dass die Grundmodelle der geschlossenen rohrförmigen Struktur und/oder die Grundmodelle der offenporigen zellularen Struktur Aussparungen bzw. Bohrungen und/oder Erhebungen bzw. Kerne enthalten und/oder dass zusätzliche Grundmodelle und/oder Kerne angefügt werden, welche spätere Aussparungen bzw. Bohrungen und/oder Schultern oder sonstige funktionelle Formen formen. Ein Vorteil des Urformverfahrens ist, dass komplizierte bzw. komplexe Strukturen in der Form der erfindungsgemäßen Vorrichtung hergestellt werden können und nicht durch spanende Bearbeitung hergestellt werden müssen.

Gemäß einer vorteilhaften Ausführungsform des erfindungsgemäßen Verfahrens wird vorgeschlagen, dass die Porendichte der offenporigen zellularen Struktur des ansonsten eine geschlossene homogene Struktur aufweisenden rohrförmigen Elements in einem Bereich von 1 bis 50 Poren pro Zoll (pores per inch [ppi]) beträgt. Besonders vorteilhaft ist eine Porendichte von 10 bis 30ppi. Eine additive vorteilhafte Ausführungsform des erfindungsgemäßen Verfahrens besteht darin, dass die Porosität der offenporigen zellularen Struktur des ansonsten eine geschlossene homogene Struktur aufweisenden rohrförmigen Elements in einem Bereich von 80 bis 99% ist. Besonders vorteilhaft ist eine Porosität von 92 bis 98%. Dadurch ist in Kombination mit der vorteilhaften Porendichte eine ausreichende Festigkeit und Stabilität der offenporigen zellularen Struktur gegeben, mit gleichzeitiger, ausreichender Durchdringung der Poren mit dem Material der isolierenden Schicht und einer guten Stabilität der isolierenden Schicht.

Eine ergänzende Ausführung des erfindungsgemäßen Verfahrens ist, dass die Bereiche mit den angefügten Grundmodellen der offenporig zellularen Struktur auf der Außenseite der Grundmodelle des geschlossenen rohrförmigen Elements liegen.

Eine Variante des erfindungsgemäßen Verfahrens besteht darin, dass Innen- und Außenseite des Grundmodells des geschlossenen rohrförmigen Elements Bereiche mit angefügten Grundmodellen der offenporigen zellularen Struktur aufweisen.

Eine vorteilhafte Weiterbildung des erfindungsgemäßen Verfahrens schlägt vor, dass das erfindungsgemäße rohrförmige Element, welches mindestens einen Bereich mit einer offenporigen zellularen Struktur aufweist und welches eine ansonsten geschlossene Struktur aufweist.

Eine vorteilhafte Ausführungsform des erfindungsgemäßen Verfahrens schlägt vor, dass das erfindungsgemäße rohrförmige Element, welches mindestens einen Bereich mit einer offenporigen zellularen Struktur aufweist und welches eine ansonsten geschlossene Struktur aufweist, vor dem Herstellen der isolierenden Schicht mechanisch bearbeitet wird.

Nach einer weiteren sehr vorteilhaften Weiterbildung des Verfahrens der Erfindung wird die isolierende Schicht der Rohrleitung bzw. des Messrohr mit einem Gießverfahren, insbesondere mit einem Injection-Molding- oder einem Transfer-Molding-Verfahren hergestellt.

Diese Verfahren umfassen üblicherweise im Wesentlichen folgende Verfahrensschritte:
- Bilden eines Gießraums mittels eines vorgefertigten rohrförmigen Elements, welches eine ansonsten geschlossene Struktur aufweist und welches mindestens einen Bereich mit einer offenporigen zellularen Struktur aufweist und mittels einer temporär gehalterten Form, welche den Gießraum für das Material der isolierenden Schicht und damit die spätere Form der isolierenden Schicht vorgeben und diesen Gießraum gießdicht bis auf mindestens eine Eingießöffnung für das verflüssigte Material der isolierenden Schicht verschließen,
- Eingießen des verflüssigten Materials der isolierenden Schicht in den Gießraum,
- Entfernen der temporär gehalterten Form.

Einer fachlich qualifizierten Person ist das Formen einer isolierenden Schicht, z.B. mittels eines Transfer-Molding-Verfahrens, z.B. aus der EP1039269A1 bekannt und daher wird dies hier nicht weiter ausgeführt.

Nach einer sehr vorteilhaften Ausgestaltung des Verfahrens der Erfindung werden mehrere temporär gehalterte Formen verwendet.

Eine weitere sehr vorteilhafte Ausgestaltung des erfindungsgemäßen Verfahrens sieht vor, dass der Gießraum zwischen der temporär gehalterten Form und der geschlossenen Struktur des rohrförmigen Elements die offenporige zellulare Struktur des rohrförmigen Elements zumindest Teilweise einschließt.

Gemäß einer vorteilhaften Weiterbildung des erfindungsgemäßen Verfahrens, dringt das verflüssigte Material der isolierenden Schicht in die offenporige zellulare Struktur des rohrförmigen Elements ein und erstarrt, bevor die temporär gehalterten Formen entfernt werden.

Gemäß einer weiteren vorteilhaften Ausführungsform des erfindungsgemäßen Verfahrens wird vorgeschlagen, dass in bestimmten Bereichen keine temporär gehalterten Formen vorgesehen sind, insbesondere wenn Grundmodelle der offenporigen zellularen Struktur zwischen rohrförmigen Grundmodellen angebracht sind.

Gemäß einer weiteren vorteilhaften Ausführungsform des erfindungsgemäßen Verfahrens wird vorgeschlagen, dass die temporär gehalterten Formen Aussparungen bzw. Bohrungen und/oder Erhebungen bzw. Kerne enthalten und/oder dass zusätzliche Formen und/oder Kerne angefügt werden, welche spätere Aussparungen bzw. Bohrungen und/oder Schultern oder sonstige funktionelle Formen formen. Ein Vorteil des Urformverfahrens ist, dass komplizierte bzw. komplexe Bauteilstrukturen hergestellt werden können und somit nicht durch eine spanende Bearbeitung hergestellt werden müssen.

Eine weitere vorteilhafte Ausgestaltung des erfindungsgemäßen Verfahrens sieht vor, dass das Material der isolierenden Schicht elektrisch nicht leitend ist. Dies kann beispielsweise organischer Kunststoff oder natürliches Polymer sein. Die isolierende Schicht besteht besonders vorteilhaft aus elektrisch nichtleitenden und nichtmagnetischen duroplastischen oder elastomeren oder insbesondere thermoplastischen Werkstoffen. Besonders Polyurethane weisen neben Hartgummi und fluorhaltigen Kunststoffen, wie z.B. PTFE, PFA, gute chemische und mechanische Eigenschaften und eine gute Verarbeitbarkeit auf.

Gemäß einer sehr vorteilhaften Ausführungsform des erfindungsgemäßen Verfahrens wird vorgeschlagen, dass das Material der isolierenden Schicht nicht bis an eine Seite der geschlossenen homogenen Struktur des rohrförmigen Elements gelangt oder dass das Material der isolierenden Schicht bis an eine Seite der geschlossenen homogenen Struktur des rohrförmigen Elements gelangt und die Poren der offenporig zellularen Struktur des ansonsten eine geschlossene homogene Struktur aufweisenden rohrförmigen Elements vollständig ausgefüllt.

Eine vorteilhafte Ausführungsform des erfindungsgemäßen Verfahrens schlägt vor, dass die isolierende Schicht mechanisch bearbeitet wird.

Die Erfindung wird anhand der nachfolgenden Figuren näher erläutert.

Fig. 1 zeigt ein im Teilschnitt dargestelltes erfindungsgemäßes Messrohr für ein magnetisch induktives Durchflussmessgerät ohne isolierende Schicht.

Fig. 2 zeigt ein im Teilschnitt dargestelltes erfindungsgemäßes Messrohr für ein magnetisch induktives Durchflussmessgerät mit isolierender Schicht.

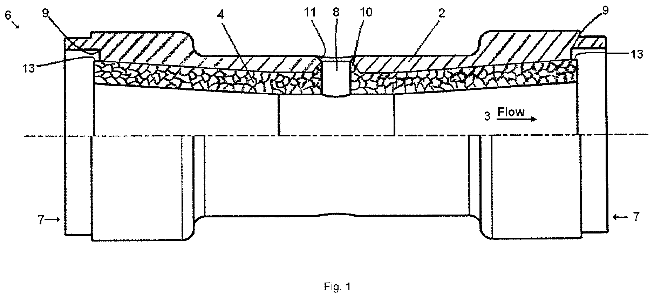

In Fig. 1 ist ein erfindungsgemäßes Messrohr für ein magnetisch induktives Durchflussmessgerät im Teilschnitt dargestellt. Auf die Zeichnung der isolierenden Schicht wurde aus Gründen der Übersichtlichkeit verzichtet. Die dem Messmedium 3 zugewandte Seite des Messrohrs 1 ist hier die zu isolierende Seite.

Ein rohrförmiges Element 6, zur Messung des Durchflusses eines Messmediums 3 im Inneren des Rohres, mit einer geschlossenen homogenen Struktur 2, verfügt über eine offenporig zellulare Struktur 4, auf der dem Messmedium 3 zugewandten Seite der geschlossenen Struktur 2. Die homogene geschlossene Struktur 2 umschließt die offenporig zellulare Struktur 4 somit koaxial und dient als äußere form gebende sowie form stabilisierende Umhüllung des Messrohrs 1. Der Übergang von homogener geschlossener Struktur 2 zur offenporig zellularen Struktur 4 ist nahtlos.

Dieses rohrförmige Element 6 besteht bevorzugt aus nichtmagnetischem Metall, z.B. aus einer Nickelbasislegierung, und wird im Feingussverfahren hergestellt. Die offenporige zellulare Struktur 4 weist eine näherungsweise konstante Dicke auf. Zum druckdichten Einfügen in eine von einem Messmedium 3 durchströmbare Rohrleitung weist das Messrohr 1 ein einlassseitiges erstes Ende und ein auslassseitiges zweites Ende auf. Diese Enden sind die Stirnseiten 7 des rohrförmigen Elements 6. Der Innendurchmesser des rohrförmigen Elements 6 ist hier auf den Stirnseiten 7 größer, als in der Mitte. Dadurch weist das rohrförmige Element 6 einen konischen Verlauf des Innendurchmessers über der halben Länge auf.

Das rohrförmige Element 6 verfügt in seiner geschlossenen homogenen Struktur 2 über Schultern 9, welche in Richtung der Stirnseiten 7 weisen. Diese dienen unter anderem zur Abdichtung des Werkzeugs zur Einbringung der isolierenden Schicht 5. Die offenporige zellulare Struktur 4 steht in Richtung der Stirnseiten über diese Schultern 9 über. In diesem Bereich steht die offenporige zellulare Struktur 4 nicht in direktem koaxialen Kontakt zur homogenen geschlossenen Struktur 2, welche die offenporige zellulare Struktur 4 koaxial umschließt. Dadurch kann die homogen geschlossene isolierende Schicht 5 stirnseitig die offenporige zellulare Struktur 4 vollständig einschließen, so dass beim Messrohr 1 die offenporige zellulare Struktur nicht mehr sichtbar ist und das, in Kombination mit den Schultern 9, mit einer vorgegebenen, leicht herstellbaren, näherungsweise konstanten Schichtdicke.

Weiterhin sind Öffnungen 8 zur Aufnahme von Elektroden zur Messung einer im Messmedium 3 induzierten Spannung vorgesehen. Im Bereich dieser Öffnungen 8 ist die homogene geschlossene Struktur 2 auf der dem Messmedium zugewandten Seite des rohrförmigen Elements 6 eingesenkt. Im Bereich dieser ersten Senkung 10 befindet sich die offenporig zellulare Struktur, zusätzlich zur Achsparallelen, in Richtung der Öffnung 8. Dadurch ist die hier nicht dargestellte isolierende Schicht 5 auch in koaxialer Richtung im Bereich der Öffnungen 8 durch die offenporig zellulare Struktur gestützt. Auch auf ihrer gegenüberliegenden Seite ist die homogen geschlossene Struktur 2 eingesenkt. Jedoch ist hier diese zweite Senkung 11 nicht so tief, dass die offenporig zellulare Struktur 4 auf die dem Messmedium 3 abgewandte Seite des rohrförmigen Elements 6 zeigt.

In anderen Ausführungsformen kann eine durchgehende, offenporig zellulare Struktur 4 im Bereich der Öffnungen 8 durchaus bis auf die die dem Messmedium 3 abgewandte Seite des rohrförmigen Elements 6 führen. Eine auf beiden Seiten der homogen geschlossenen Struktur 2 verlaufende und/oder ununterbrochene, offenporige zellulare Struktur 4, insbesondere mit einer näherungsweise gleichen Dicke, kann nicht nur bei Öffnungen 8, sondern auch auf den Stirnseiten 7 des Messrohres oder zwischen zwei Schichten der geschlossenen Struktur 2 des rohrförmigen Elements 6, bspw. in einer Nut in der geschlossenen Struktur 2 des rohrförmigen Elements 6, vorgesehen sein.

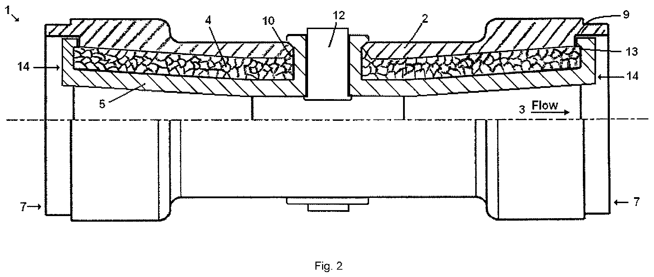

In Fig. 2 ist zusätzlich zur Fig. 1 die isolierende Schicht 5 des Messrohrs 1 dargestellt.

Das Messrohr 1 umfasst demnach, neben den bereits bekannten Merkmalen, eine koaxial umlaufende, geschlossene homogene Struktur 2, eine offenporig zellulare Struktur 4 auf der Innenseite der geschlossenen Struktur 2 und eine isolierende Schicht 5, die das Messrohr 1 gegenüber dem Messmedium 3 isoliert. Die isolierende Schicht 5 weist eine homogen geschlossene Struktur auf der Seite des Messmediums 3 auf. Das Material der isolierenden Schicht 5 dringt bei der Herstellung des Messrohrs 1 in die Poren der offenporig zellularen Struktur 4 des rohrförmigen Elements 6 ein und bildet mit dieser so eine feste Verbindung.

Die isolierende Schicht 5 weist eine näherungsweise konstante Wandstärke des geschlossenen homogenen Bereichs auf, auch auf den Stirnseiten 7 oder im Bereich der Öffnung 8. Wie bei magnetisch induktiven Durchflussmessgeräten kleiner Nennweiten üblich, weist das das Messrohr 1 einen konischen Verlauf des Innendurchmessers über der halben Länge auf, da auch die Dicke der offenporig zellularen Struktur 4 zwischen der homogen geschlossenen isolierenden Schicht 5, welche in Richtung des Messmediums 3 weist, und der geschlossenen Struktur 2 des rohrförmigen Elements 6 über der Länge des Messrohrs 1 näherungsweise konstant ist.

In die Öffnungen 8 werden Elektroden 12 zur Messung einer im Messmedium 3 induzierten Spannung druckdicht eingesetzt. Die isolierende Schicht 5 wird in die Richtung der Öffnung 8 durch die Elektroden 12 gestützt, wodurch die gezeigte Ausgestaltung der trichterförmig zulaufenden, offenporigen zellularen Struktur 4 ausreicht, die isolierende Schicht 5 gegen ein Ablösen von dem rohrförmigen Element 6 zu schützen. Deshalb sind die Senkungen 10, 11 der Form, dass auf der dem Messmedium 3 abgewandten Seite der geschlossenen Struktur 2 des rohrförmigen Elements 6, keine offenporige Struktur 4 des rohrförmigen Elements 6 zu finden ist.

An den Schultern 9 steht die offenporig zellulare Struktur 4 über die Schultern 9 in der geschlossenen Struktur 2 des rohrförmigen Elements über. So hat die homogene geschlossene isolierende Schicht 5 in Richtung der Stirnseiten 7 des Messrohrs 1 koaxiale Seiten 14, welche bis zum Rand eine glatte und ebene Oberfläche aufweisen. Ohne diesen Überstand 13 hätte die isolierende Schicht 5 ohne weitere Bearbeitung keine ebene, glatte Oberfläche bis zum Rand in Richtung der Stirnseiten 7 und das Werkzeug zum Einbringen der isolierenden Schicht 5 könnte fertigungsbedingt nicht abgedichtet werden.

### Bezugszeichenliste

- 1.: Messrohr
- 2.: geschlossene homogene Struktur des rohrförmigen Elements
- 3.: Messmedium
- 4.: offenporige zellulare Struktur des rohrförmigen Elements
- 5.: geschlossene homogene Struktur der isolierenden Schicht
- 6.: rohrförmiges Element
- 7.: Stirnseite
- 8.: Öffnung
- 9.: Schulter
- 10.: Senkung
- 11.: Senkung
- 12.: Elektrode
- 13.: Überstand der offenporigen zellularen Struktur des rohrförmigen Elements
- 14.: Stirnseite der isolierenden Schicht

## Patentansprüche

1. Rohrleitung bzw. Messrohr (1) mit mindestens einer, mindestens bereichsweise isolierenden Schicht (5) und mit einem rohrförmigen Element (6),
welches eine ansonsten geschlossene Struktur (2) aufweist und mindestens einen Bereich mit einer offenporigen zellularen Struktur (4) aufweist, wobei das Material der isolierenden Schicht (5) in die Poren der offenporigen zellularen Struktur (4) des rohrförmigen Elements (6) eingedrungen ist und die isolierende Schicht (5) auf der zu isolierenden Seite eine geschlossene homogene Struktur aufweist,
wobei die homogene geschlossene Struktur (2) die offenporige zellulare Struktur (4) koaxial umschließt und als äußere formgebende sowie formstabilisierende Umhüllung des Messrohres (1) dient,
**dadurch gekennzeichnet,**
**dass** das rohrförmige Element (6) einstückig durch ein Urformverfahren erhalten ist,
**dass** der Übergang von der homogenen geschlossenen Struktur zur offenporigen zellularen Struktur nahtlos ist,
und **dass** das Material der isolierenden Schicht (5) durch ein anschließendes Urformverfahren erhalten ist.

2. Rohrleitung bzw. Messrohr (1) nach Anspruch 1,
**dadurch gekennzeichnet,**
**dass** das mindestens einen Bereich mit einer offenporigen zellularen Struktur (4) aufweisende rohrförmige Element (6) mit einem Feingussverfahren hergestellt wird.

3. Rohrleitung bzw. Messrohr (1) nach Ansprüchen 1 bis 2,
**dadurch gekennzeichnet,**
**dass** die isolierende Schicht (5) mit einem Guss-, insbesondere Druckguss- oder Spritzgussverfahren hergestellt wird.

4. Rohrleitung bzw. Messrohr (1) nach Ansprüchen 1 bis 3,
**dadurch gekennzeichnet,**
**dass** die Porengröße der offenporigen zellularen Struktur 1-50ppi beträgt.

5. Rohrleitung bzw. Messrohr (1) nach Ansprüchen 1 bis 4,
**dadurch gekennzeichnet,**
**dass** die Porosität der offenporigen zellularen Struktur 80-99% beträgt.

6. Rohrleitung bzw. Messrohr (1) nach Ansprüchen 1 bis 5,
**dadurch gekennzeichnet,**
**dass** die Rohrleitung bzw. das Messrohr (1) Teil eines Systems zur Durchflussmessung, insbesondere der magnetisch induktiven Durchflussmessung ist.

7. Rohrleitung bzw. Messrohr (1) nach Ansprüchen 1 bis 6,
**dadurch gekennzeichnet,**
**dass** der Bereich mit der offenporigen zellularen Struktur (4) des rohrförmigen Elements (6) auf der Seite eines in dem rohrförmigen Element (6) strömenden Mediums (3) zugewandt ist.

8. Rohrleitung bzw. Messrohr (1) nach Ansprüchen 1 bis 7,
**dadurch gekennzeichnet,**
**dass** der Bereich mit der offenporigen zellularen Struktur (4) des rohrförmigen Elements (6) auf der Seite einer Öffnung (8) in dem rohrförmigen Element (6) ist.

9. Rohrleitung bzw. Messrohr (1) nach Ansprüchen 1 bis 8,
**dadurch gekennzeichnet,**
**dass** das rohrförmige Element (6) auf einer Stirnseite (7) eine Schulter (9) in der geschlossenen Struktur (2) aufweist, wobei die Schulter (9) in Richtung der Stirnseite (7) zeigt.

10. Rohrleitung bzw. Messrohr (1) nach Anspruch 9,
**dadurch gekennzeichnet,**
**dass** der Bereich mit der offenporigen zellularen Struktur (4) des rohrförmigen Elements (6) auf einer Stirnseite (7) des rohrförmigen Elements (6) die Schulter (9) der geschlossenen Struktur (2) in Richtung der Stirnseite (7) überragt.

11. Rohrleitung bzw. Messrohr (1) nach Ansprüchen 1 bis 10,
**dadurch gekennzeichnet,**
**dass** die Wandstärke der geschlossenen homogenen Struktur der isolierenden Schicht (5) näherungsweise konstant ist.

12. Rohrleitung bzw. Messrohr (1) nach Ansprüchen 1 bis 11,
**dadurch gekennzeichnet,**
**dass** die lichte Weite der Rohrleitung bzw. des Messrohrs (1) über die Länge der Rohrleitung bzw. des Messrohrs (1) variieren kann.

13. Verfahren zur Herstellung einer Rohrleitung bzw. eines Messrohrs (1) mit mindestens einer, mindestens bereichsweise isolierenden Schicht (5) und mit einem rohrförmigen Element (6), welches mindestens einen Bereich mit einer offenporigen zellularen Struktur aufweist und welches eine ansonsten geschlossene Struktur aufweist,
wobei das Material der isolierenden Schicht (5) in die Poren der offenporigen zellularen Struktur des rohrförmigen Elements (6) eindringt und die isolierende Schicht (5) auf der zu isolierenden Seite eine geschlossene homogene Struktur aufweist,
wobei die homogene geschlossene Struktur (2) die offenporige zellulare Struktur (4) koaxial umschließt und als äußere formgebende sowie formstabilisierende Umhüllung des Messrohres (1) dient,
**dadurch gekennzeichnet,**
**dass** das rohrförmige Element (6) einstückig durch ein Urformverfahren geformt wird,
**dass** der Übergang von der homogenen geschlossenen Struktur zur offenporigen zellularen Struktur nahtlos ist,
und **dass** das Material der isolierenden Schicht (5) durch ein anschließendes Urformverfahren geformt wird.

14. Verfahren zur Herstellung einer Rohrleitung bzw. eines Mess rohrs nach Anspruch 13,
**dadurch gekennzeichnet,**
**dass** das Urformverfahren zum Formen des rohrförmigen Elements der Rohrleitung bzw. des Messrohrs ein Feingussverfahren ist, welches folgende Verfahrensschritte umfasst:
- Fertigung eines Grundmodells, insbesondere eines Wachsmodells, einer offenporigen zellularen Struktur, insbesondere in der Form eines rohrförmigen Elements,
- Fertigung eines Grundmodells eines rohrförmigen Elements mit einer geschlossenen Struktur,
- Zusammenfügen der der Grundmodelle,
- Einbetten der zusammengefügten Grundmodelle in eine verlorene Form durch Anbringen eines Formstoffs,
- Ausschmelzen der Grundmodelle und Brennen der verlorenen Form zu einem gießfesten Modell,
- Gießen des Materials des rohrförmigen Elements, welches mindestens einen Bereich mit einer offenporigen zellularen Struktur aufweist und welches eine ansonsten geschlossene Struktur aufweist, in die verlorene Form,
- Entfernen des Formstoffs der verlorenen Form.

15. Verfahren zur Herstellung einer Rohrleitung bzw. eines Messrohrs nach Anspruch 14,
**dadurch gekennzeichnet,**
**dass** das Urformverfahren zum Formen der isolierenden Schicht der Rohrleitung bzw. des Messrohrs ein Gießverfahren ist, welches folgende Verfahrensschritte umfasst:
- Bilden eines Gießraums mittels eines vorgefertigten rohrförmigen Elements, welches eine ansonsten geschlossene Struktur aufweist und welches mindestens einen Bereich mit einer offenporigen zellularen Struktur aufweist und mittels einer temporär gehalterten Form, welche den Gießraum für das Material der isolierenden Schicht und damit die spätere Form der isolierenden Schicht vorgeben und diesen Gießraum gießdicht bis auf mindestens eine Eingießöffnung für das verflüssigte Material der isolierenden Schicht verschließen,
- Eingießen des verflüssigten Materials der isolierenden Schicht in den Gießraum,
- Entfernen der temporär gehalterten Form.

## Claims

1. Pipe or measuring tube (1) with at least one layer (5), which is at least partially insulating, and with a tubular element (6), which has an otherwise closed structure (2) and at least one area with an open-pore cellular structure (4),
wherein the material of the insulating layer (5) has entered into the pores of the open-pore cellular structure (4) of the tubular element (6) and the insulating layer (5) has a closed homogeneous structure on the side to be insulated,
wherein the homogeneous closed structure (2) coaxially surrounds the open-pore cellular structure (4) and serves as an outer jacket of the measuring tube (1) providing shape and giving the shape stability,
**characterized in that**
the tubular element (6) is implemented as a single piece using an original mould process,
the transition from the homogeneous closed structure to the open-pore cellular structure is seamless,
and **in that** the material of the insulating layer (5) is obtained by a subsequent original mould process.

2. Pipe or measuring tube (1) as claimed in Claim 1,
**characterized in that**
the tubular element (6) which has at least one area with an open-pore cellular structure (4) is manufactured using a precision casting process.

3. Pipe or measuring tube (1) as claimed in Claims 1 to 2,
**characterized in that**
the insulating layer (5) is manufactured using a casting process, particularly a die casting process or an injection molding process.

4. Pipe or measuring tube (1) as claimed in Claims 1 to 3,
**characterized in that**
the pore size of the open-pore cellular structure is 1 to 50 ppi.

5. Pipe or measuring tube (1) as claimed in Claims 1 to 4,
**characterized in that**
the porosity of the open-pore cellular structure is 80 to 99%.

6. Pipe or measuring tube (1) as claimed in Claims 1 to 5,
**characterized in that**
the pipe or the measuring tube (1) is part of a flow measuring system, particularly electromagnetic flow measurement.

7. Pipe or measuring tube (1) as claimed in Claims 1 to 6,
**characterized in that**
the area with the open-pore cellular structure (4) of the tubular element (6) is oriented on the side of a medium (3) flowing through the tubular element (6).

8. Pipe or measuring tube (1) as claimed in Claims 1 to 7,
**characterized in that**
the area with the open-pore cellular structure (4) of the tubular element (6) is on the side of an opening (8) in the tubular element (6).

9. Pipe or measuring tube (1) as claimed in Claims 1 to 8,
**characterized in that**
the tubular element (6) has a shoulder (9) in the closed structure (2) on the front face (7), wherein the shoulder (9) faces in the direction of the front face (7).

10. Pipe or measuring tube (1) as claimed in Claim 9,
**characterized in that**
on a front face (7) of the tubular element (6), the area with the open-pore cellular structure (4) of the tubular element (6) projects over the shoulder (9) of the closed structure (2) in the direction of the front face (7).

11. Pipe or measuring tube (1) as claimed in Claims 1 to 10,
**characterized in that**
the wall thickness of the closed homogeneous structure of the insulating layer (5) is approximately constant.

12. Pipe or measuring tube (1) as claimed in Claims 1 to 11,
**characterized in that**
the inside width of the pipe or measuring tube (1) can vary over the length of the pipe or measuring tube (1).

13. Procedure designed for the manufacture of a pipe or measuring tube (1) with at least one layer (5) which is at least partially insulating and with a tubular element (6) with at least one area with an open-pore cellular structure and an otherwise closed structure (2),
wherein the material of the insulating layer (5) has entered into the pores of the open-pore cellular structure (4) of the tubular element (6) and the insulating layer (5) has a closed homogeneous structure on the side to be insulated,
wherein the homogeneous closed structure (2) coaxially surrounds the open-pore cellular structure (4) and serves as an outer jacket of the measuring tube (1) providing shape and giving the shape stability,
**characterized in that**
the tubular element (6) is formed as a single piece using an original mould process,
the transition from the homogeneous closed structure to the open-pore cellular structure is seamless,
and **in that** the material of the insulating layer (5) is obtained by a subsequent original mould process.

14. Procedure designed for the manufacture of a pipe or a measuring tube as claimed in Claim 13,
**characterized in that**
the original mould process for casting the tubular element of the pipe or measuring tube is a precision molding process comprising the following steps:
- Production of a base model, particularly a wax model, of an open-pore cellular structure, particularly in the form of a tubular element,
- Production of a base model of a tubular element with a closed structure,
- Joining together of the two base models,
- Embedding of the joined base models into a lost mould by applying a molding material,
- Melting off of the base models and burning of the lost mould to form a cast-proof model,
- Casting of the material of the tubular element, which has at least one area with an open-pore cellular structure and an otherwise closed structure, into the lost mold,
- Removal of the molding material of the lost mold.

15. Procedure designed for the manufacture of a pipe or a measuring tube as claimed in Claim 14,
**characterized in that**
the original casting process to cast the insulating layer of the pipe or measuring tube is a casting process which comprises the following steps:
- Formation of a casting space using a pre-fabricated tubular element, which has an otherwise closed structure and which has at least one area with an open-pore cellular structure, and using a temporarily maintained mold which specify the casting space for the material of the insulating layer and thereby the later shape of the insulating layer and which seal this casting space in a cast-tight manner with the exception of a casting opening for the liquefied material of the insulating layer,
- Casting of the liquefied material of the insulating layer into the casting space,
- Removal of the temporarily maintained mould.

## Revendications

1. Conduite ou tube de mesure (1) avec au moins une couche (5) au moins partiellement isolante et avec un élément tubulaire (6), lequel présente au moins une zone avec une structure cellulaire à pores ouverts (4) et à part çà une structure fermée (2),
le matériau de la couche isolante (5) s'infiltrant dans les pores de la structure cellulaire à pores ouverts (4) de l'élément tubulaire (6) et la couche isolante (5) présentant sur le côté à isoler une structure homogène fermée,
la structure homogène fermée (2) entourant coaxialement la structure cellulaire à pores ouverts (4) et servant d'enveloppe générant et stabilisant la forme extérieure du tube de mesure (1),
**caractérisé**
**en ce que** l'élément tubulaire (6) est réalisé en une seule pièce au moyen d'un procédé de formage initial,
**en ce que** la transition de la structure homogène fermée vers la structure cellulaire à pores ouverts est parfaite,
et **en ce que** la matière de la couche isolante (5) est obtenue par un procédé de formage initial.

2. Conduite ou tube de mesure (1) selon la revendication 1,
**caractérisé**
**en ce qu'**au moins une zone comporte un élément (6) tubulaire présentant une structure cellulaire à pores ouverts (4), lequel élément est fabriqué selon un procédé de moulage de précision.

3. Conduite ou tube de mesure (1) selon les revendications 1 à 2,
**caractérisé**
**en ce que** la couche isolante (5) est fabriquée avec un procédé de moulage, notamment un procédé de moulage sous pression ou par injection.

4. Conduite ou tube de mesure (1) selon les revendications 1 à 3,
**caractérisé**
**en ce que** la taille des pores de la structure cellulaire à pores ouverts est de 1 à 50 ppi.

5. Conduite ou tube de mesure (1) selon les revendications 1 à 4,
**caractérisé**
**en ce que** la porosité de la structure cellulaire à pores ouverts est de 80 à 99 %.

6. Conduite ou tube de mesure (1) selon les revendications 1 à 5,
**caractérisé**
**en ce que** la conduite ou le tube de mesure (1) fait partie intégrante d'un système destiné à la mesure de débit, notamment la mesure de débit magnéto-inductive.

7. Conduite ou tube de mesure (1) selon les revendications 1 à 6,
**caractérisé**
**en ce que** la zone avec la structure cellulaire à pores ouverts (4) de l'élément tubulaire (6) est orientée du côté d'un produit (3) s'écoulant dans l'élément tubulaire (6).

8. Conduite ou tube de mesure (1) selon les revendications 1 à 7,
**caractérisé**
**en ce que** la zone avec la structure cellulaire à pores ouverts (4) de l'élément tubulaire (6) se trouve sur le côté d'une ouverture (8) dans l'élément tubulaire (6).

9. Conduite ou tube de mesure (1) selon les revendications 1 à 8,
**caractérisé**
**en ce que** l'élément tubulaire (6) présente sur sa face frontale (7) un épaulement (9) dans la structure fermée (2), l'épaulement (9) étant orienté en direction de la face frontale (7).

10. Conduite ou tube de mesure (1) selon la revendication 9,
**caractérisé**
**en ce que** la zone avec la structure cellulaire à pores ouverts (4) de l'élément tubulaire (6) déborde, sur une face frontale (7) de l'élément tubulaire (6), l'épaulement (9) de la structure fermée (2) en direction de la face frontale (7).

11. Conduite ou tube de mesure (1) selon les revendications 1 à 10,
**caractérisé**
**en ce que** l'épaisseur de paroi de la structure homogène fermée de la couche isolante (5) est approximativement constante.

12. Conduite ou tube de mesure (1) selon les revendications 1 à 11,
**caractérisé**
**en ce que** le diamètre intérieur de la conduite ou du tube de mesure (1) peut varier sur la longueur de la conduite ou du tube de mesure (1).

13. Procédé destiné à la fabrication d'une conduite ou d'un tube de mesure (1) avec au moins une couche (5) au moins partiellement isolante et avec un élément tubulaire (6), lequel présente une zone avec une structure cellulaire à pores ouverts et à part çà une structure fermée,
le matériau de la couche isolante (5) s'infiltrant dans les pores de la structure cellulaire à pores ouverts (4) de l'élément tubulaire (6) et la couche isolante (5) présentant sur le côté à isoler une structure homogène fermée,
la structure homogène fermée (2) entourant coaxialement la structure cellulaire à pores ouverts (4) et servant d'enveloppe générant et stabilisant la forme extérieure du tube de mesure (1),
**caractérisé**
**en ce que** l'élément tubulaire (6) est réalisé en une seule pièce au moyen d'un procédé de formage initial,
**en ce que** la transition de la structure homogène fermée vers la structure cellulaire à pores ouverts est parfaite,
et **en ce que** la matière de la couche isolante (5) est formée par un procédé de formage initial.

14. Procédé destiné à la fabrication d'une conduite ou d'un tube de mesure selon la revendication 13,
**caractérisé**
**en ce que** le procédé de formage initial destiné au formage de l'élément tubulaire de la conduite ou du tube de mesure est un procédé de moulage de précision comprenant les étapes de procédé suivantes :
- Fabrication d'un modèle de base, notamment d'un modèle en cire, d'une structure cellulaire à pores ouverts, notamment dans la forme d'un élément tubulaire,
- Fabrication d'un modèle de base d'un élément tubulaire avec une structure fermée,
- Assemblage des deux modèles de base,
- Incorporation des modèles de base assemblés dans un moule perdu en appliquant une matière à mouler,
- Fusion des modèles de base et cuisson du moule perdu en un modèle résistant à la coulée,
- Moulage dans le moule perdu de la matière de l'élément tubulaire, lequel présente au moins une zone avec une structure cellulaire à pores ouverts et lequel présente à part çà une structure fermée,
- Extraction de la matière moulée du moule perdu.

15. Procédé destiné à la fabrication d'une conduite ou d'un tube de mesure selon la revendication 14,
**caractérisé**
**en ce que** le procédé de formage initial destiné au formage de la couche isolante de la conduite ou du tube de mesure est un procédé de moulage comprenant les étapes de procédé suivantes :
- Formation d'un espace de coulée au moyen d'un élément tubulaire préfabriqué, lequel présente au moins une structure cellulaire à pores ouverts et à part çà une structure fermée, et au moyen d'un moule maintenu temporairement, lesquels prédéfinissent l'espace de coulée pour la matière de la couche isolante et, par conséquent, la forme ultérieure de la couche isolante, et obturent cet espace de coulée de façon étanche à l'exception d'au moins une ouverture de coulée pour la matière liquéfiée de la couche isolante,
- Coulage de la matière liquéfiée de la couche isolante dans l'espace de coulée,
- Retrait du moule maintenu temporairement.
